(19) Europäisches Patentamt
European Patent Office
Office européen des brevets

(11) **EP 2 196 495 A1**

(12) **EUROPÄISCHE PATENTANMELDUNG**

(43) Veröffentlichungstag:
**16.06.2010 Patentblatt 2010/24**

(51) Int Cl.:
*C08K 3/36* (2006.01)     *C08J 5/00* (2006.01)

(21) Anmeldenummer: **08171345.5**

(22) Anmeldetag: **11.12.2008**

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**
Benannte Erstreckungsstaaten:
**AL BA MK RS**

(71) Anmelder: **Fraunhofer-Gesellschaft zur Förderung der angewandten Forschung e.V. 80686 München (DE)**

(72) Erfinder:
• **Schmid, Helmut**
  **72250, Freudenstadt (DE)**
• **Eckl, Wilhelm**
  **76228 Wolfartsweier (DE)**

(74) Vertreter: **Gille Hrabal Struck Neidlein Prop Roos Patentanwälte Brucknerstrasse 20 40593 Düsseldorf (DE)**

(54) **Verwendung von oxidhaltigen Zusammensetzungen zur Verbesserung der Barriereeigenschaften von Polymermaterialien**

(57)     Beschrieben wird eine Formmasse mit einem Mittel zur Steigerung der Barriereeigenschaften von polymeren Grundmaterialien sowie deren Verwendung zur Herstellung von entsprechenden Formkörpern.

EP 2 196 495 A1

## Beschreibung

Verwendung von oxidhaltigen Zusammensetzungen zur Verbesserung der Barriereeigenschaften von Polymermaterialien

Die vorliegende Erfindung betrifft eine Formmasse, welche neben einem polymeren Grundmaterial zumindest auch ein Mittel zur Verbesserung der Barriereeigenschaften des polymeren Grundmaterials umfasst. Weiterer Gegenstand der vorliegenden Erfindung ist ein Verfahren zur Herstellung solcher Formmassen sowie deren spezifische Verwendung.

Die vorliegende Erfindung betrifft polymere Materialien mit Barriereeigenschaften gegenüber Feuchtigkeit, Gasen und Strahlung. Diese polymeren Materialien können beispielsweise zur Herstellung von Gehäusen verwendet werden, um einen definierten Raum von seiner Umgebung abzutrennen und gleichzeitig gegebenenfalls in Erweiterung damit eine Funktionsumgebung zu schaffen.

Diese polymeren Materialien können beispielsweise als Siegelfolien für Gasgeneratormaterialien oder als Verpackung für unterschiedliche Güter, wie beispielsweise Medizinprodukte, Pflanzenschutzmittel und Lebensmittel, verwendet werden, um das zu verpackende Gut zu schützen.

Bezogen auf die Verpackung von empfindlichen chemischen Systemen werden unterschiedliche Anforderungen an die Gehäuse- und Verpackungsmaterialien gestellt. Bei Medizinprodukten und Lebensmitteln müssen die verwendeten Materialien einerseits unter hygienischen und sensorischen Gesichtspunkten auf die jeweiligen Güter oder Funktionsmaterialien abgestimmt sein und andererseits diese vor qualitätsmindernden Einflüssen, welche beispielsweise zu einer chemischen Zersetzung der Systeme führen können, schützen.

Die wichtigsten Gehäuse- und Verpackungsmaterialien sind Kunststoffe, Als Kunststoffmaterialien werden bevorzugt Polykondensate, wie beispielsweise Polyethylenterephthalate (PET), verwendet, da Polykondensate eine Reihe von Vorteilen aufweisen.

So besitzt beispielsweise das Polyethylenterephthalat (PET) als ein wichtiger Vertreter der Polykondensate gute mechanische Eigenschaften, wie beispielsweise eine ausgeprägte Bruchsicherheit, und ist weitgehend chemisch inert. Polyethylenterephthalat gehört darüber hinaus zu den wenigen Kunststoffen, die auch bei höheren Temperaturen verwendet werden können. Darüber hinaus weist Polyethylenterephthalat eine geringe Dichte auf, was insbesondere im Bereich der Verpackungen von Vorteil ist.

Nachteilig an den bekannten Gehäuse- und Verpackungsmaterialien, beispielsweise aus Polyethylenterephthalat, ist jedoch die für viele Anwendungsfälle unzureichende Barriereeigenschaft bezogen auf die aus wirtschaftlichen Gründen vorgegebenen geringen Schichtdicken des Gehäuse- und Verpackungsmaterials. So lassen aus Polyethylenterephthalat gefertigte Hohlkörper, wie beispielsweise Flaschen, im Allgemeinen eine gewisse Permeation von Gasen, wie Sauerstoff und Kohlendioxid, oder von elektromagnetischer Strahlung, wie beispielsweise sichtbarem Licht oder UV-Licht, zu.

So werden beispielsweise Sauerstoffmoleküle auf der äußeren Oberfläche von Gehäusen und Verpackungen adsorbiert, diffundieren durch die Materialwand und können an der Innenseite der Desorption unterliegen. Auf die gleiche Weise kann es bei gashaltigen Produkten, die zum Beispiel Kohlensäure enthalten oder unter einer Stickstoffatmosphäre verpackt wurden, zu einer Diffusion der Gase aus dem Gehäuse- oder Verpackungsinhalt kommen.

Polymere Materialien mit entsprechend verbesserten Barriereeigenschaften führen damit zu einer Verlängerung der Lebensdauer und Haltbarkeit der verpackten Güter, was für Hersteller und Verbraucher wünschenswert ist.

Allerdings ist die Barriereeigenschaft entsprechender Verpackungsmaterialien nicht das einzig entscheidende Qualitätsmerkmal, sondern muss mit weiteren möglichst einzuhaltenden Anforderungen abgestimmt werden. Hierzu zählt neben den mechanischen Eigenschaften unter anderem auch das äußere Erscheinungsbild, So weisen beispielsweise Polyethylenterephthalat-Verpackungen den Vorteil auf, dass sie im Allgemeinen durchsichtig sind, so dass ein Betrachten der verpackten Güter möglich ist. Wenn man die Barriereeigenschaften von Polyethylenterephthalat-Verpackungen verbessern möchte und zu diesem Zweck dem Kunststoffmaterial Additive zusetzt oder alternativ auf der Oberfläche der Polyethylenterephthalat-Verpackungen eine Beschichtung aufbringt, so kann die Verwendung dieser Additive oder Beschichtungen dazu führen, dass die Transparenz des Materials leidet, das Material eine unansehnliche Farbe annimmt oder aber ein Betrachten der Güter überhaupt nicht mehr möglich ist. Ferner sind Beschichtungen aufgrund der Komplexität des Applikationsprozesses und der damit verbunden hohen Kosten im Vergleich zur weiter unten dargestellten erfindungsgemäßen Lösung nachteilig.

Die Verwendung von Additiven zur Verbesserung der Barriereeigenschaften von polymeren Materialien ist aus dem Stand der Technik bekannt.

So offenbart die US 7,176,274 B1 die Verwendung von Nano-Silikateilchen, welche eine Größe von 0,5 mm bis 1,00 nm aufweisen, zur Erhöhung der Barriereeigenschaft gegenüber Gasen. Das verwendete Polyethylenterephthalat-Material wird zur Herstellung von geformten Behältern, wie beispielsweise Plastikflaschen, verwendet,

Nachteilig an dieser Zusammensetzung, umfassend Polyethylenterephthalat und Nano-Silikateilchen, ist, dass diese Zusammensetzung zwar eine Wirkung zur Absorption von Gasen aufweist, jedoch im Hinblick auf gewünschte synergistische Zusatzeffekte und die Erreichung einer gewünschten optimalen Transparenz der polymeren Materialien verbesserungswürdig ist.

Wenn die Aktivität der Gasbarriereeigenschaft des resultierenden Polyethylenterephthalats gemäß US 7,176,274 B1 weiter verbessert werden soll und dieses beispielsweise durch die Beimischung zusätzlicher Additive zur Verbesserung der Gasbarriereeigenschaften erfolgen soll, so resultiert eine Mischung aus mindestens zwei unterschiedlichen Additiven zur Verbesserung der Gasbarriereeigenschaften, welche in Kombination die Transparenz des Polyethylenterephthalat-Materials beeinträchtigen können.

Dem gemäß liegt bisher kein Konzept vor, mit welchem die Barriereeigenschaften von polymeren Materialien verbessert werden kann und mit welchem unterschiedliche Additive zur Verbesserung der Barriereeigenschaften verwendet werden, ohne dass gleichzeitig die Transparenz der resultierenden polymeren Materialien nachteilig beeinflusst wird.

Damit ergibt sich als eine Aufgabe der vorliegenden Erfindung, ein Gehäuse- und Verpackungsmaterial aus einem polymeren Grundmaterial zur Verfügung zu stellen, welches eine verbesserte Barriereeigenschaft gegenüber Feuchtigkeit, Gasen und elektromagnetischer Strahlung aufweist.

Die verwendeten Materialien sollen darüber hinaus eine hohe Transparenz aufweisen, um eine optische, insbesondere visuelle und spektroskopische, Kontrollmöglichkeit der verpackten Güter zu ermöglichen,

Ferner sollen die verwendeten Materialien im Vergleich zu den aus dem Stand der Technik bekannten Materialien verbesserte mechanische Eigenschaften, wie beispielsweise Festigkeit, Steifigkeit und Temperaturwechselbeständigkeit, aufweisen und zu geringeren Schwindungs- und Verzugseffekten führen.

Die vorliegende Erfindung löst diese Problematik dadurch, dass sie eine Formmasse zur Verfügung stellt, welche mindestens ein polymeres Grundmaterial und mindestens ein Mittel zur Verbesserung der Barriereeigenschaften des polymeren Grundmaterials umfasst.

In einer ersten Ausführungsform der vorliegenden Erfindung umfasst das Mittel zur Verbesserung der Barriereeigenschaften ein Mischoxid, welches aus mindestens zwei vollständig oxidierten Teiloxiden generiert wurde. In dieser ersten Ausführungsform der vorliegenden Erfindung ist die Barrierewirkung im Wesentlichen auf die Erhöhung der Kristallinität des polymeren Grundmaterials zurückzuführen.

In einer zweiten Ausführungsform der vorliegenden Erfindung umfasst das Mittel zur Verbesserung der Barriereeigenschaften ein Mischoxid, welches aus mindestens einem vollständig oxidierten Teiloxid und mindestens aus einem nicht vollständig oxidierten *Teiloxid (Suboxid) generiert wurde. In dieser zweiten Ausführungsform der vorliegenden Erfindung ist die Barrierewirkung im Wesentlichen auf die Erhöhung der Kristallinität des polymeren Grundmaterials und die Eigenschaft des Suboxids zur Weiteroxidation zurückzuführen.

In einer dritten Ausführungsform der vorliegenden Erfindung umfasst das Mittel zur Verbesserung der Barriereeigenschaften ein Mischoxid, welches aus mindestens zwei nicht vollständig oxidierten Teiloxiden (Suboxiden) generiert wurde, In dieser dritten Ausführungsform der vorliegenden Erfindung ist die Barrierewirkung im Wesentlichen auf die Erhöhung der Kristallinität des polymeren Grundmaterials und die Eigenschaft der beiden Suboxide zur Weiteroxidation zurückzuführen.

In einer vierten Ausführungsform der vorliegenden Erfindung umfasst das Mittel zur Verbesserung der Barriereeigenschaften eine Mischung aus mindestens einem Oxid und mindestens einem Additiv mit der Befähigung zur Weiteroxidation unter Sauerstoffbindung, In dieser vierten Ausführungsform der vorliegenden Erfindung ist die Barrierewirkung im Wesentlichen auf die Erhöhung der Kristallinität des polymeren Grundmaterials und die Eigenschaft des Additivs zur Weiteroxidation unter der Bindung von Sauerstoff zurückzuführen.

Zusätzlich beruht der erfindungsgemäße Effekt der Barrierewirkung auf einer mechanischen Sperrwirkung.

Erfindungsgemäß ist also vorgesehen, dass spezifische Kombinationen der zuvor definierten Systeme zur Verbesserung der Gasbarriereeigenschaft von polymeren Materialien gemeinsam in dem polymeren Grundmaterial verwendet werden, wobei insbesondere durch geeignete Kombination der Systeme sowohl die Barriereeigenschaften, die mechanischen Eigenschaften als auch das optische Erscheinungsbild des polymeren Grundmaterials aufrecht gehalten bzw. verbessert werden.

Um die Transparenz des polymeren Grundmaterials bei Zugabe der zuvor definierten Systeme aufrecht zu erhalten, ist in einer besonders bevorzugten Ausführungsform vorgesehen, dass die zuvor definierten chemischen Additivsysteme im Hinblick auf die Art der Bestandteile und das Mischungsverhältnis dieser Bestandteile so ausgewählt werden, dass die Differenz der Brechungsindizes zwischen dem Mittel zur Verbesserung der Barriereeigenschaft einerseits und dem polymeren Grundmaterial andererseits höchstens 25 %, besonders bevorzugt höchstens 15 %, insbesondere höchstens 5 %, beträgt. Insbesondere ist es bevorzugt, dass der Brechungsindex des Mittels zur Verbesserung der Barriereeigenschaft und des polymeren Grundmaterials identisch sind.

Aufgrund der erhöhten Effizienz ist es insbesondere bevorzugt, dass die verwendeten Oxide für das Mittel zur Verbesserung der Barriereeigenschaften in Form von Nanoteilchen vorliegen. Durch die Verwendung von Oxiden in Nanogröße wird erreicht, dass die verwendeten Oxide ein größeres Verhältnis zwischen Oberfläche und Volumen aufweisen und aufgrund der im Verhältnis zu nicht nanoslcaligen Oxiden größeren Oberfläche eine gesteigerte mögliche Umsetzungsrate gegenüber Sauerstoff aufweisen. Darüber hinaus wird mit den nanoskaligen Oxiden eine homogene Verteilung bei gleichzeitiger verbesserter Durchdringung des polymeren Grundmaterials erreicht.

Im Rahmen der vorliegenden Erfindung werden unter dem Begriff der nanoskaligen Oxide Teilchen mit einer durch Röntgenbeugung bestimmten Primärpartikelgröße von vorzugsweise kleiner gleich 50 nm, besonders bevorzugt im Bereich von 40 bis 7 nm, verstanden.

Erfindungsgemäß wurde erkannt, dass für die Aufrechthaltung der Transparenz von polymeren Grundmaterialien unter gleichzeitiger Verwendung von Mitteln zur Verbesserung der Barriereeigenschaften das Verhältnis des Brechungsindex des Mittels zur Verbesserung der Barriereeigenschaften zu dem Brechungsindex des polymeren Grundmaterials maßgeblich ist,

Basierend auf der erfindungsgemäßen Anforderung, dass die Transparenz des polymeren Verpackungsmaterials durch die Zumischung der Mittel zur Verbesserung der Barriereeigenschaften im Wesentlichen nicht beeinträchtigt werden soll, ist eine Parameteroptimierung gegensätzlicher Effekte der Barrierewirkung und der Transparenz durch die Auswahl geeigneter Oxide, bevorzugt in nanoskaliger Größe, und eine Gehaltsanpassung der entsprechenden Oxide erforderlich.

Die Problematik der Beeinträchtigung der optischen Erscheinung durch die Mittel zur Verbesserung der Barriereeigenschaften liegt darin begründet, dass durch die Mittel zur Erhöhung der Barrierewirkung es unter anderem auch zu einer Erhöhung der Dichte und der Kristallinität des polymeren Grundmaterials, beispielsweise durch die Nanopartikel als Kristallisationskeime (Nukleierungsmittel), kommen kann, wobei sich im Allgemeinen auch die Transparenz der polymeren Grundmaterialien mit zunehmender Kristallinität verschlechtert.

Wenn man beispielsweise Polyethylenterephthalat als einen wesentlichen Vertreter von polymeren Grundmaterialien im Sinne der vorliegenden Erfindung näher betrachtet, so ist festzustellen, dass das Polyethylenterephthalat einen Brechungsindex von im Allgemeinen 1,58 bis 1,64 aufweist. Wenn man Polyethylenterephthalat nun ein Mittel zur Verbesserung der Barriereeigenschaften zugibt, so sollte dieses Mittel in Summe einen Brechungsindex aufweisen, welcher um höchstens 25 %, besonders bevorzugt höchstens 15 %, insbesondere höchstens 5 %, von dem Brechungsindex des verwendeten Polyethylenterephthalats abweicht, da sich andernfalls das optische Erscheinungsbild, wie beispielsweise die Transparenz, des Polyethylenterephthalats verschlechtert. Besonders bevorzugt weist das Mittel zur Verbesserung der Barriereeigenschaften einen identischen Brechungsindex im Vergleich zu dem Polyethylenterephthalat auf.

Darüber hinaus wird durch die spezifische Auswahl und Kombination der Additive zur Verbesserung der Barriereeigenschaften aus den Oxiden die Agglomerationsneigung, sofern diese nicht bereits über chemische Additivierung gelöst, verringert. Dieser Effekt liegt darin begründet, dass die van-der-Waals-Wechselwirkungsenergie von Partikel/Polymer proportional zur Hamaker-Konstante ist, Diese Hamaker-Konstante ist proportional zur Brechnungindexdifferenz $\Delta n$ (Partikel/Polymer).

Durch die Verwendung von Oxid-Mischungen, insbesondere in nanoskaliger Form, kann darüber hinaus eine Anpassung des resultierenden Brechungsindex der Additivzusammensetzung aus den zwei Oxiden nach den Beziehungen

$$\rho = \frac{1}{\sum k_{\rho,i} \cdot x_i} \longrightarrow n = 1 + \rho \sum k_{n,i} \cdot x_i$$

n: Brechungsindex, $\rho$: Dichte gemäß linksstehender Formel
$k_n$: Proportionalitäts-Konstante im Hinblick auf n für die Komponente i
$x_i$: Masseanteil der Komponente i

realisiert werden.

Das erfindungsgemäße Mittel zur Verbesserung der Barriereeigenschaften kann je nach Ausführungsform, wie vorstehend erläutert, Mischoxide umfassen. Diese Mischoxide, welche im Rahmen der vorliegenden Erfindung in der Additivierung zur Verbesserung der Barriereeigenschaften des polymeren Grundmaterials verwendet werden können, werden vorzugsweise aufgebaut aus Teiloxiden, welche ausgewählt werden aus der Gruppe, bestehend aus Siliciumdioxid ($SiO_2$). Aluminiumoxid ($Al_2O_3$), Titandioxid ($TiO_2$) und nichthumantoxischen Übergangsmetallsuboxiden, wobei die einzelnen Teiloxide in unterschiedlichen Phasen verwendet werden können.

Die erfindungsgemäße Formmasse umfasst ein polymeres Grundmaterial. Dieses polymere Grundmaterial kann aus einem einzigen Polymer bestehen oder eine Mischung unterschiedlicher Polymere, also ein Polymerblend, sein.

Das polymere Grundmaterial, welches im Rahmen der vorliegenden Erfindung verwendet wird, ist vorzugsweise ein kristallisierbares thermoplastisches polymeres Grundmaterial. Unabhängig hiervon handelt es sich bei dem polymeren Grundmaterial jedoch insbesondere um ein langsam kristallisierendes polymeres Grundmaterial. Im Rahmen der vorliegenden Erfindung versteht man unter einem langsam kristallisierenden Polymer ein Polymer, dessen Kristallisationsgeschwindigkeit bei Abkühlraten, wie sie bei Abkühlung einer entsprechenden Schmelze des polymeren Grundmaterials bei Umgebungstemperatur auftreten, kleiner gleich 0,3 mm/sec beträgt. Der Effekt der Kristallinitätssteuerung ist insbesondere dann von Bedeutung, wenn bei langsam kristallisierenden Polymeren schnelle Abkühlraten von größer gleich 10 °C/min realisiert werden.

Die Barrierewirkung von mikro- und nanoskaligen Oxiden beruht außer auf dem Effekt der mechanischen Sperrwirkung (physikalischer Umströmungseffekt) auch im Wesentlichen auf der Erhöhung der Kristallinitätsanteile und der Dichte teilkristalliner Thermoplaste.

Das polymere Grundmaterial kann dabei durch ein beliebiges Verfahren aus den einzelnen Monomeren gewonnen werden, Insbesondere kann das polymere Grundmaterial durch eine radikalische, anionische oder kationische Polymerisation, eine Polyaddition oder eine Polykondensation aus den entsprechenden Monomeren gewonnen werden, Besonders bevorzugt sind Polykondensate, da die Einarbeitung der erfindungsgemäßen Mittel zur Verbesserung der Barriereeigenschaften bereits auf der Ebene der Oligomer- bzw. Polymersynthese erfolgen kann und damit erleichtert wird.

Das polymere Grundmaterial der vorliegenden Erfindung umfasst in einer bevorzugten Ausführungsform mindestens eines der Materialien, welche ausgewählt werden aus der Gruppe, bestehend aus Polyalkenen, wie Polyethylenen, Polypropylenen und Polyisobutylenen, Polybutadienen; Polyisoprenen; substituierten Polyalkenen, wie Polystyrolen; Polyvinylalkoholen; Polyvinylethern; Polyacrylsäurenitrilen und Polymethocrylsdureestern, Polyvinylhalogeniden, wie Polyvinylchloriden, Polytetrafluorethylenen und Polychloroprenen; Copolymeren aus Polyalkenen, wie Polyethylenen, Polypropylenen, Polyisobutylenen und Polystyrolen, mit Polybutadienen und/oder Polyisoprenen (wie ENB (5-Ethlyiden-2-norbornen)); Polyethern, wie Polyoxymethyen, Polyethylenoxid und Polypropylenoxid: Polyisocyanatderivaten, wie Polyharnstoffen und Polyurethanen; gegebenenfalls substituierten Siloxanen; Komplexpolymeren; methylenverbrückten Polymeren, wie Aminoplasten und Phenoplasten; Polyamiden, wie Nylon-6,6 und Perlon-5; und Polyestern, wie Polyalkylenterephthalaten und Polycarbonaten.

Insbesondere bevorzugt ist es im Rahmen der vorliegenden Erfindung, wenn das polymere Grundmaterial ein Polyester ist.

Besonders bevorzugte polymere Grundmaterialien sind Polyelhylenterephthalat, Polypropylenterephathalt, Polybutylenterephthalat und Polyethylennaphthalat. Diese polymeren Grundmaterialien können, beispielsweise durch Einbau von Isophthalsäureeinheiten oder von Einheiten auf Basis von alternativen Polyolen, modifiziert sein. Von diesen besonders bevorzugten polymeren Grundmaterialien ist Polyethylenterephthalat (PET) insbesondere bevorzugt.

Wie bereits erwähnt, weist das insbesondere bevorzugte Polyethylenterephthalat einen üblichen Brechungsindex im Bereich von 1 ,58 bis 1,64 auf. Wenn nun erfindungsgemäß Mittel zur Verbesserung der Barriereeigenschaften des polymeren Grundmaterials Polyethylenterephthalat verwendet werden, so weist diese Additivierung in ihrer Gesamtheit vorzugsweise einen Brechungsindex auf, welcher in dem vorgenannten Bereich liegt bzw. diesen angegebenen Bereich um maximal 25 % über- oder unterschreitet.

Im Rahmen der vorliegenden Erfindung ist es insbesondere bevorzugt, wenn die erfindungsgemäß vorgesehene Formmasse einen Basiskristallinitätsanteil von größer gleich 35 %, besonders bevorzugt größer gleich 38 %, insbesondere größer gleich 40 %, aufweist.

Wenn als das polymere Grundmaterial Polyethylenterephthalat entweder alleine oder in Kombination mit anderen polymeren Grundmaterialien verwendet wird, so kann das Mittel zur Verbesserung der Barriereeigenschaften insbesondere $SiO_2$-Nanopartikel umfassen, Der Vorteil der Verwendung von $SiO_2$-Nanopartikeln in diesem Zusammenhang ist, dass reines Nano-$SiO_2$ mit einem Brechungsindex von 1,46 einen brauchbaren Spezialfall darstellt, da das Nano-$SiO_2$ eine im erfindungsgemäß definierten Bereich liegenden Brechungsindex aufweist (+/- 25 %, bezogen auf einen Bereich von 1,58 bis 1,64).

Erfindungsgemäß ist für eine effiziente Ausbildung der Barriereeigenschaft vorgesehen, dass neben diesem einen Oxid (z. B, des nanoskaligen $SiO_2$) mindestens ein weiteres Oxid als Ausgangskomponente eines Mischoxids in der Additivierung zur Verbesserung der Barriereeigenschaften verwendet werden kann. Bei der Verwendung von $SiO_2$-Nanoteilchen mit einem Brechungsindex von n = 1,46 kann beispielsweise auch ein nicht vollständig oxidiertes Übergangsmetalloxid (Suboxid), beispielsweise in nanoskaliger Form, verwendet werden Dieses nicht vollständig oxidierte Übergangsmetalloxid kann zusätzlich als chemischer Sauerstofffänger durch eine entsprechende Weiteroxidation dienen. Das resultierende System zur Verbesserung der Barriereeigenschaft bewirkt somit nicht nur eine erhöhte Barriereeigenschaft aufgrund eines mechanischen Effekts und einer zunehmenden Kristallinität und Dichte des polymeren Grundmaterials durch Einbau entsprechender Oxide, sondern auch ein Abfangen von Sauerstoff durch chemische Reaktion, Darüber hinaus wird durch die erfindungsgemäße Kombination von nanoskaligem $SiO_2$ mit Suboxiden der Einfluss des Suboxids auf die Transparenz des polymeren Grundmaterials soweit abgeschwächt, dass das Übergangsmetalloxid verwendbar ist, ohne dass es zu einer wesentlichen Trübung oder Einfärbung des polymeren Grundmaterials kommt,

Durch die Verwendung der nicht vollständig oxidierten Übergangsmetalloxide, insbesondere in nanoskaliger Form, wird darüber hinaus bewirkt, dass resultierende Systeme einen wasseraktivierbaren Schalter aufweisen, da derartige Reaktionen (Reaktion mit Sauerstoff unter Weiteroxidation des Suboxids) "wasserkatalysiert" im Sinne einer starken Reaktionsbeschleunigung bei Normaltemperatur sind, Dieser Effekt des Suboxids kann zusätzlich durch die Gegenwart von Spuren von Salzhydraten in dem polymeren Grundmaterial, vorzugsweise von Hydraten des Calciumphosphats, beschleunigt werden.

Im Rahmen der vorliegenden Erfindung ist es insbesondere bevorzugt, wenn die verwendeten Oxide, insbesondere die verwendeten nanoskaligen Oxidteilchen, sphärische Teilchen sind, da hierdurch die Agglomerationsneigung der Oxide verringert wird und eine homogenere Verteilung in der Reaktionsmischung zur Herstellung des polymeren Grundmaterials möglich ist,

Die Verwendung von nanoskaligen Mischoxiden ist neben dessen Eignung als Barrieremittel zu fungieren auch darin begründet, dass sich verfahrenstechnische Vorteile ergeben, wenn man nanoskalige Mischoxide bei der Herstellung von entsprechenden Halbzeugen (wie Folien) und Endprodukten (wie Flaschen) verwendet, da die Schichtdicke bei der Folienextrusion durch die Verwendung von Mischoxiden gleichmäßiger wird.

Die Menge der Mischoxide, welche in der erfindungsgemäßen Formmasse verwendet werden, unterliegt keiner besonderen Beschränkung und beträgt vorzugsweise 0,1 bis 0,001 Gew,-%, besonders bevorzugt 0,01 bis 0,001 Gew.-%, jeweils bezogen auf die Gesamtmasse der Ausgangskomponenten.

In den einzelnen Ausführungsformen der vorliegenden Erfindung ist es möglich, dass weitere Sauerstofffänger neben Oxiden in der erfindungsgemäßen Formmasse verwendet werden. Als weiteres Mittel zur Verbesserung der Barriereeigenschaft werden 2,5-Di-tert.-butylhydroxytoluol (BT) oder ähnliche Radikalfänger vorgeschlagen. Diese werden zusammen mit dem oxidischen Bestandteil bei der Herstellung der Formmasse zugegeben.

Wenn in der erfindungsgemäßen Formmasse 2,5-Di-tert.-butylhydroxytoluol verwendet wird, so beträgt dessen Menge 0,1 bis 0,001 Gew.-%, besonders bevorzugt 0,01 bis 0,001 Gew.-%, jeweils bezogen auf die Gesamtmasse der Ausgangskomponenten.

Darüber hinaus kann die erfindungsgemäße Formmasse weitere übliche Additive umfassen. Ein übliches Additiv ist beispielsweise ein grenzflächenaktives Additiv (Tensid), Dieses Tensid kann beispielsweise ausgewählt werden aus der Gruppe der aprotischen nicht ionischen, polaren Detergentien. Wenn im Rahmen der vorliegenden Erfindung in der Formmasse ein grenzflächenaktives Additiv verwendet wird, so beträgt dessen Menge vorzugsweise 1 bis 10 ppm, jeweils bezogen auf die Gesamtmasse der Ausgangskomponenten.

Die Verwendung der grenzflächenden Additive dient im Wesentlichen dazu, hochkonzentrierte Suspensionen der Oxide, insbesondere in nanoskaliger Form, zu stabilisieren.

Darüber hinaus kann die erfindungsgemäße Formmasse mindestens ein weiteres Additiv umfassen, welches ausgewählt ist aus der Gruppe, bestehend aus IR-Absorbern, Wärmestabilisatoren (wie Triethylenphosphorsäuretriamid), Antiblockierungsmitteln, antistatischen Mitteln, Farbstoffen, Katalysatoren (im Falle von Polyethylenterephthalat: beispielsweise titanhaltigen Katalysatoren und/oder antimonhaltigen Katalysatoren) und zusätzlichen UV-Absorbern.

Wenn ein zusätzliches Additiv der vorgenannten Gruppe in der erfindungsgemäßen Formmasse verwendet wird, so werden diese in üblichen Mengen verwendet. Bei einer heterogen katalysierten Synthese können die Katalysatoren auf einem Träger appliziert vorgelegt,

Die erfindungsgemäß zu verwendenden Mischoxide sind am Fraunhofer Institut für chemische Technik ICT, 76327 Pfinztal, Bundesrepublik Deutschland, verfügbar.

Weiterer Gegenstand der vorliegenden Erfindung ist ein Verfahren zur Herstellung einer erfindungsgemäßen Formmasse, welches durch die folgenden Verfahrensschritte gekennzeichnet ist:

(a) Bereitstellen eines erfindungsgemäßen Mittels zur Verbesserung der Barriereeigenschaft;

(b) Zugeben des Mittels zur Verbesserung der Barriereeigenschaften zu den das Polymer aufbauenden Monomeren bzw. Oligomeren; und

(c) Polymerisation bzw. Polykondensation der Monomere bzw. Oligomere.

Im Rahmen der vorliegenden Erfindung ist es dabei insbesondere bevorzugt, wenn die Mischoxide in der Form einer Suspension dem entsprechenden Monomeren oder Oligomeren zugegeben werden.

Im Fall der Synthese von Polyethylenterephthlat kann einerseits zunächst eine Vorkondenstaion der Monmere Ethylenglykol und Terephthalsäure unter Anwendung einer speziellen Temperatur- und Druckprofils erfolgen. Nach Anschluss dieser Vorkondensation kann dann die Zugabe der erfindungsgemäßen Mittel zur Verbesserung der Barriereeigenschaften in der Form einer Suspension erfolgen, wobei als Suspensionsmedium vorzugsweise Ethylenglykol verwendet wird. Danach erfolgt die Weiterführung der Polykondensation unter einem speziellen Druck- und Temperaturprofil bis zur gewünschten Viskosität. Danach wird das Material unter Stickstoffdruck ausgetragen und granuliert.

Die Zugabe der Suspension der erfindungsgemäßen Mittel zu den Monomeren bzw. Oligomeren erfolgt vorzugsweise nach Abschluss der Vorkondensation des polymeren Grundmaterials, um dadurch mögliche Veränderungen der Mechanistik zu vermeiden, wobei bedacht werden muss, dass in dem Fall der Polykondensationen hohe Polykondensationsgrade nur bei höchsten Umsatzraten zu erzielen sind.

Aus gleichen Gründen ist es im Rahmen der vorliegenden Erfindung bevorzugt, dass das Einarbeiten der erfindungsgemäßen Mittel mit konzentrierten Suspensionen erfolgt, Die Konzentration entsprechender Suspensionen kann bis zu 15 Gew.-%, vorzugsweise zwischen 11 bis 5 Gew.-%, betragen.

Darüber hinaus ist es auch möglich, dass die Additive zur Verbesserung der Barriereeigenschaften bereits vor der Vorkondentation, d.h. zu den reinen Monomeren, zugegeben werden.

Weiterer Gegenstand der vorliegenden Erfindung ist eine Formmasse, welche gemäß den oben beschriebenen Verfahren erhalten wird.

Darüber hinaus betrifft die vorliegende Erfindung auch Formkörper, welche hergestellt werden ausgehend von den oben beschriebenen Formmassen. Entsprechende Formkörper finden im Wesentlichen ihre Anwendung in Bereichen der Gehäuse-, Funktions- und Verpackungsmaterialien.

Insbesondere ist deren Verwendung im Bereich der Verpackung von Medizinprodukten und Lebensmitteln, insbesondere von Getränkeverpackungen (Getränkeflaschen), bevorzugt.

Die erfindungsgemäßen Formkörper weisen im Fall von Polyethylenterephthalat-Folien (Halbzeuge) eine Schichtdicke von vorzugsweise 20 bis 60 $\mu$m auf. Sollten erfindungsgemäß Endprodukte hergestellt werden, wie beispielsweise Polyethylenterephthalat-Flaschen, so weisen diese eine Wandstärke von vorzugsweise 0,2 bis 0,8 mm auf. Darüber hinaus sollte die Schichtdickenverteilung der erfindungsgemäßen Formkörper eine enge Schichtdickenverteilung kleiner gleich 10 % der mittleren Schichtdicke aufweisen.

**Patentansprüche**

1. Formmasse, umfassend mindestens ein polymeres Grundmaterial und mindestens ein Additiv zur Verbesserung der Barriereeigenschaft des polymeren Grundmaterials, **dadurch gekennzeichnet, dass** das Additiv zur Verbesserung der Barriereeigenschaften ausgewählt ist aus der Gruppe, bestehend aus:

   (a) einem Mischoxid, welches aus mindestens zwei vollständig oxidierten Teiloxiden generiert wurde;
   (b) einem Mischoxid, welches aus mindestens einem vollständig oxidierten Teiloxid und mindestens aus einem nicht vollständig oxidierten Teiloxid (Suboxid) generiert wurde;
   (c) einem Mischoxid, welches aus mindestens zwei nicht vollständig oxidierten Teiloxiden (Suboxiden) generiert wurde; und
   (d) einer Mischung aus mindestens einem Oxid und mindestens einem Additiv mit der Befähigung zur Weiteroxidation unter Sauerstoffbindung.

2. Formmasse nach Anspruch 1, **dadurch gekennzeichnet, dass** die Differenz der Brechungsindizes zwischen dem Mittel zur Verbesserung der Barriereeigenschaft einerseits und dem polymeren Grundmaterial andererseits höchstens 25 % beträgt.

3. Formmasse nach Anspruch 1 oder 2, **dadurch gekennzeichnet, dass** die Oxide in der Form von nanoskaligen Teilchen vorliegen.

4. Formmasse nach einem der Ansprüche 1 bis 3, **dadurch gekennzeichnet, dass** die Oxide in dem Additiv zur Verbesserung der Barriereeigenschaften ausgewählt sind aus der Gruppe, bestehend aus Siliciumdioxid ($SiO_2$), Aluminiumoxid ($Al_2O_3$), Titandioxid ($TiO_2$) und nichthumantoxischen Übergangsmetallsuboxiden, wobei die einzelnen Teiloxide in unterschiedlichen Phasen verwendet werden können.

5. Formmasse nach einem der Ansprüche 1 bis 4, **dadurch gekennzeichnet, dass** das polymere Grundmaterial ausgewählt ist aus der Gruppe, bestehend bestehend aus Polyalkenen; Polybutadienen; Polyisoprenen; substituierten Polyalkenen, Polyvinylalkoholen; Polyvinylethern; Polyacrylsäurenitrilen und Polymethacrylsäureestern; Polyvinylhalogeniden; Copolymeren aus Polyalkenen mit Polybutadienen und/oder Polyisoprenen; Polyethern; Polyisocyanatderivaten; gegebenenfalls substituierten Siloxanen; Komplexpolymeren; methylenverbrückten Polymeren; Polyamiden; und Polyestern.

6. Formmasse nach einem der Ansprüche 1 bis 5, **dadurch gekennzeichnet, dass** mindestens ein Oxid des Additivs zur Verbesserung der Barriereeigenschaften ein nicht vollständig oxidiertes Übergangsmetalloxid ist.

7. Formmasse nach einem der Ansprüche 1 bis 6, **dadurch gekennzeichnet, dass** das Additiv zur Verbesserung der Barriereeigenschaften zusätzlich 2,5 Di-tert-butylhydroxytoluol umfasst.

8. Verfahren zur Herstellung einer Formmasse nach einem der Ansprüche 1 bis 7, **gekennzeichnet durch** die folgenden Verfahrensschritte:

   (a) Bereitstellen eines Additivs zur Verbesserung der Barriereeigenschaft gegenüber Gasen;
   (b) Zugeben des Additivs zur Verbesserung der Barriereeigenschaft gegenüber Gasen zu dem Polymer.

9. Formmasse, erhältlich nach dem Verfahren gemäß Anspruch 8,

10. Formkörper, hergestellt ausgehend von einer Formmasse gemäß einem der Ansprüche 1 bis 7 oder gemäß Anspruch 9.

11. Verwendung eines Formkörpers nach Anspruch 10 als Gehäuse-, Funktions- und/oder Verpackungsmaterial.

Europäisches
Patentamt

European
Patent Office

Office européen
des brevets

# EUROPÄISCHER RECHERCHENBERICHT

**Nummer der Anmeldung**

EP 08 17 1345

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 2006/173112 A1 (TROELZSCH CHRISTINA [US] ET AL TROELTZSCH CHRISTINA [US] ET AL) 3. August 2006 (2006-08-03) * Beispiel 1 * * Absatz [0005] * * Absatz [0010] - Absatz [0030] * * Absatz [0037] - Absatz [0039] * ----- | 1-5,10, 11 | INV. C08K3/36 C08J5/00 |
| X | EP 1 394 197 A (EMS CHEMIE AG [CH]) 3. März 2004 (2004-03-03) * Anspruch 13 * * Anspruch 19 * * Ansprüche 23-28 * * Tabellen 1,2 * * Absätze [0038] - [0058] * * Absatz [0066] * * Absatz [0073] - Absatz [0077] * * Absatz [0081] - Absatz [0082] * ----- | 1-5,8-11 | |
| X | WO 2008/084013 A (BASF SE [DE]; JAIN SACHIN [DE]; GOERTZ HANS-HELMUT [DE]; GABRIEL CLAUS) 17. Juli 2008 (2008-07-17) * Ansprüche 6,9,10,12 * * Seite 3, Zeile 34 - Seite 8, Zeile 33 * * Seite 7, Zeile 1 - Zeile 7 * * Seite 18, Zeile 24 - Seite 19, Zeile 10 * * Seite 19, Zeile 31 - Seite 20, Zeile 9 * ----- | 1-5,8-11 | RECHERCHIERTE SACHGEBIETE (IPC) C08K C08L B64D C08J |
| X | US 5 972 448 A (FRISK PETER [US] ET AL) 26. Oktober 1999 (1999-10-26) * Anspruch 1 * * Spalte 7, Zeile 8 - Spalte 9, Zeile 17; Anspruch 2; Abbildungen 1-3 * * Spalte 2, Zeile 16 - Spalte 3, Zeile 55 * ----- -/-- | 1-5,8-11 | |

Der vorliegende Recherchenbericht wurde für alle Patentansprüche erstellt

| Recherchenort | Abschlußdatum der Recherche | Prüfer |
|---|---|---|
| München | 28. April 2009 | Schmitt, Johannes |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
 
& : Mitglied der gleichen Patentfamilie, übereinstimmendes Dokument

EPO FORM 1503 03.82 (P04C03)

**Europäisches Patentamt**
**European Patent Office**
**Office européen des brevets**

## EUROPÄISCHER RECHERCHENBERICHT

Nummer der Anmeldung

EP 08 17 1345

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| D,X | US 7 176 274 B1 (JO DEOG JAE [KR] ET AL) 13. Februar 2007 (2007-02-13) * Spalte 1, Zeile 64 - Spalte 3, Zeile 49; Anspruch 1; Tabelle 1 * ----- | 1-5,8-11 | |
| X | WO 2004/108815 A (SOLVAY ENGINEERED POLYMERS [US]; DING RUI-DONG [US]; NEWELL CLINT [US]) 16. Dezember 2004 (2004-12-16) * Anspruch 5 * * Ansprüche 9-13 * * Seite 6, Zeile 19 - Seite 7, Zeile 20 * * Seite 8, Zeile 17 - Zeile 25 * * Seite 11, Zeile 27 - Seite 16, Zeile 24 * * Seite 20, Zeile 28 - Seite 21, Zeile 3 * ----- | 1-5,8-11 | |

RECHERCHIERTE SACHGEBIETE (IPC)

Der vorliegende Recherchenbericht wurde für alle Patentansprüche erstellt

| Recherchenort | Abschlußdatum der Recherche | Prüfer |
|---|---|---|
| München | 28. April 2009 | Schmitt, Johannes |

EPO FORM 1503 03.82 (P04C03)

# EP 2 196 495 A1

**ANHANG ZUM EUROPÄISCHEN RECHERCHENBERICHT**
**ÜBER DIE EUROPÄISCHE PATENTANMELDUNG NR.**          EP 08 17 1345

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

28-04-2009

| Im Recherchenbericht angeführtes Patentdokument | Datum der Veröffentlichung | Mitglied(er) der Patentfamilie | Datum der Veröffentlichung |
|---|---|---|---|
| US 2006173112 A1 | 03-08-2006 | AU 2006210987 A1<br>CN 101151312 A<br>EP 1853656 A1<br>JP 2008528766 T<br>KR 20070107084 A<br>WO 2006083815 A1 | 10-08-2006<br>26-03-2008<br>14-11-2007<br>31-07-2008<br>06-11-2007<br>10-08-2006 |
| EP 1394197 A | 03-03-2004 | DE 10239326 A1<br>JP 2004083911 A<br>KR 20040018959 A<br>US 2004259996 A1 | 18-03-2004<br>18-03-2004<br>04-03-2004<br>23-12-2004 |
| WO 2008084013 A | 17-07-2008 | KEINE | |
| US 5972448 A | 26-10-1999 | US 5876812 A<br>US 5916685 A | 02-03-1999<br>29-06-1999 |
| US 7176274 B1 | 13-02-2007 | KEINE | |
| WO 2004108815 A | 16-12-2004 | EP 1639022 A2<br>JP 2007501894 T | 29-03-2006<br>01-02-2007 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 7176274 B1